# EUROPEAN PATENT APPLICATION

(11) **EP 0 533 935 A1**
(43) Date of publication of application: **31.03.1993**
(21) Application number: 92901448.8
(22) Date of filing: 20.12.1991
(51) Int. Cl.: H04Q 3/58, H04M 1/00, H04M 1/72, H04M 9/00, H04M 9/02

(54) **TELEPHONE SET**

(30) Priority: 26.03.1991 JP 61401/91
(71) Applicant: SEIKO EPSON CORPORATION, Shinjuku-ku Tokyo 163 (JP)
(72) Inventor: SENDAI, Yoshiiku, Suwa-shi Nagano 392 (JP)
(74) Representative: Wood, Anthony Charles
(86) International application number: JP9101741
(87) International publication number: WO9217988

(57) **Abstract**

A telephone set provided with a plurality of handsets connectable with different external office lines respectively, and with the same external office line. Provided are dialing buttons (5) and a circuit (26) for sending out a dial signal in a main body (1) of the telephone set, and a speaking circuit (6e), a calling circuit (6f) and a hook button (6a) for selecting one of the speaking circuit and the calling circuit in each of the handsets (6-9). A first switching circuit (25) is for connecting automatically an external office line to one of the handsets. A second switching circuit (27) is operated through the dialing buttons to connect the respective handsets to each other. Wireless connection of the main body of the telephone set with the handsets is more effective.

## Description

### Technical Field

The present invention relates to a telephone including a telephone proper connected to a plurality of external office or main wires and a plurality of handsets connected to the telephone proper and the telephone is so designed that the handsets can be respectively connected to the separate external main wires and also the handsets can be connected to the same main wires.

### Background Art

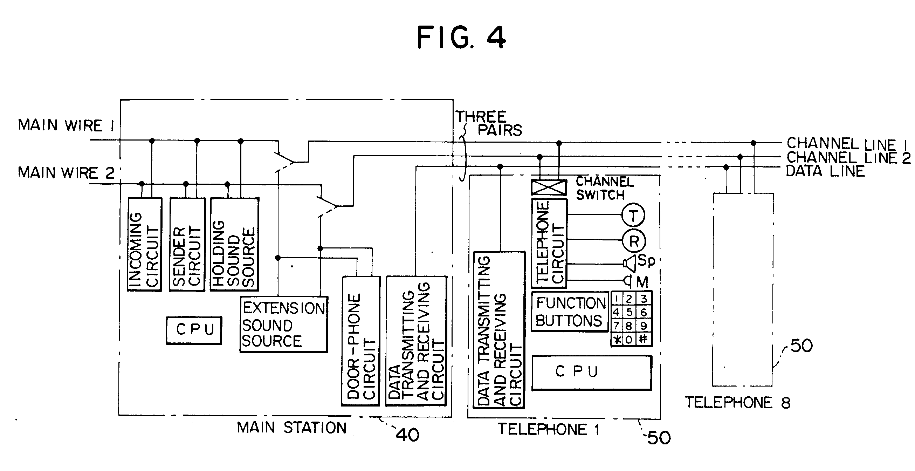

Fig. 4 is a block diagram showing an example of system telephone set which has already been known. Eight units of a telephone 50 are connected to a main station 40 connected to two office or main wires, and an ID checking system is employed for the control signals between the main station 40 and the telephones 50 so that each of the control signal is additionally provided with an ID corresponding to one of the telephones so as to make discrimination as to which control signal corresponds to which telephone and the transmission and reception of the control signals are effected through a pair of data lines. The component elements of each telephone include a telephone circuit, a data transmitting and receiving circuit, dial and functional buttons, etc., and the processing of button depression information, lamp flashing, etc., is performed by a CPU.

With conventional telephone sets including such system telephone set, however, a one-to-one conversation by telephone has been presupposed so that it is impossible for a plurality of persons to simultaneously participate in the conversation by use of a single telephone.

It is an object of the present invention to provide a telephone including a telephone proper connected to a plurality of external office or main wires and a plurality of handsets connected to the telephone proper and so designed that the handsets can be respectively connected to the separate external main wires and also the handsets can be connected to the same external main wire.

### Disclosure of Invention

In accordance with the present invention, a telephone is composed of a telephone proper connected to a plurality of external main wires and a plurality of handsets connected to the telephone proper and there are provided, on the telephone proper side, dial buttons, a plurality of communication means each corresponding to one of the handsets to make communication therewith, first switching means for changing the connections of the communication means with the external main wires, second switching means responsive to dial signals for changing the connections of the main wires with one another and dial signal transmitting means for transmitting a dial signal to each of the main wiers to which the handset is connected and, on each handset side, means for communicating with the telephone proper, signal and voice conversion means and receiving announcing means. As a result, separate telephone conversations can be performed simultaneously by use of the handsets and also a plurality of persons can participate in the same telephone conversation.

On the other hand, the telephone proper and the handsets are interconnected by radio at different frequencies thereby increasing the range of utilization for the handsets.

In addition, IC card record reproducing means and control means are provided on the telephone proper side so that the programs of IC cards are utilized to provide the telephone with additional functions.

### Brief Description of Drawings

Fig. 1 is an external view showing an example of the present invention,
Fig. 2 is a view showing the cross-sectional shape taken along the line A-A of Fig. 1,
Fig. 3 is a block diagram showing an example of the electric construction of the present invention, and
Fig. 4 is a block diagram for a conventional system telephone set.

### Best Mode for Carrying Out the Invention

The present invention will now be described in detail with reference to the accompanying drawings.

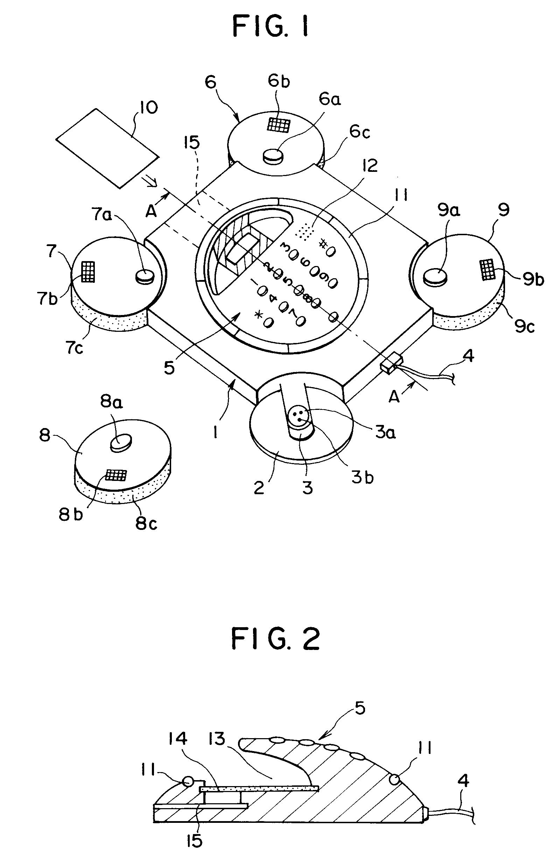

Fig. 1 is an external view showing an example of the present invention and it includes a telephone proper 1 having dial buttons 5 and connected to a plurality of external circuits through a cable 4 and four circular handsets 6 to 9 adapted to be connected by radio to the telephone proper 1. The handsets 6 to 9 are usually placed on mounting supports 2 at the four corners of the telephone proper 1 so as to be each engaged with a fixing bar 3 and fixed in place and thereby to be prevented from moving freely. Each of the fixing bars 3 is provided with charging contacts 3a for charging the handset and a signal terminal 3b for communication with the handset.

The telephone proper 1 is provided with eight lamp switches 11 around the dial buttons 5, a speaker 12 and a loading slot 15 for an IC card 10 having recorded thereon a programm for adding a given function to the telephone. Also, the handsets 6 to 9 are respectively provided with hook bottons 6a to 9a, microphones 6b to 9b and speakers 6c to 9c.

Fig. 2 is a view showing the cross-sectional shape along the line A-A of Fig. 1. As will be seen from the Figure, the central portion of the telephone proper 1 including the dial buttons 5, etc., is formed into a dome-like shape and also the domed portion is formed with a cutout 13 extending from above the dial buttons 5 to the back side thereof thereby allowing to use the cutout 13 as a gripe when carrying the telephone with one. In addition, the portion of the cutout 13 is covered with a transparent sheet 14 so that even if the IC card is inserted into the loading slot 15, the caption of the IC card can be seen from the outside.

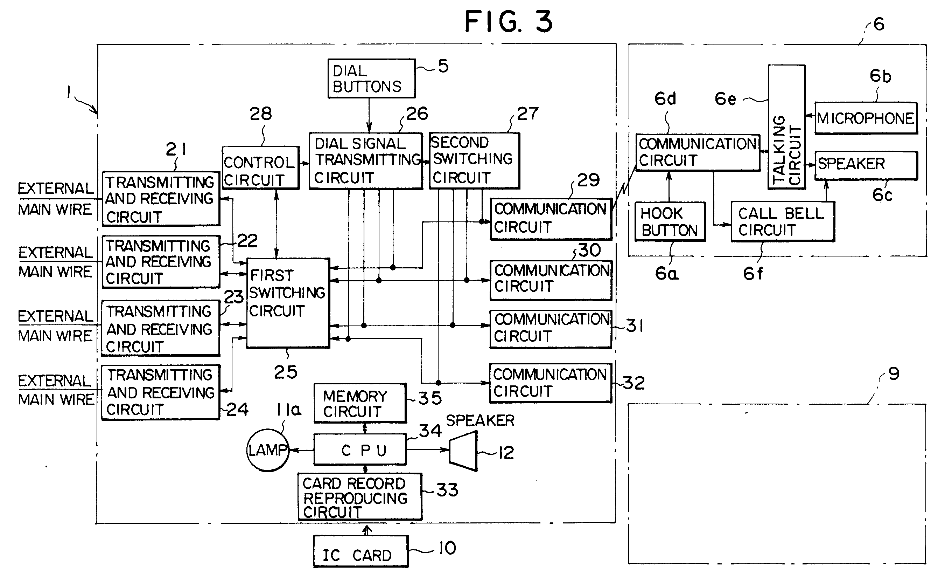

Fig. 3 is a block diagram showing an example of the electric construction of the present invention.

The telephone proper 1 includes transmitting and receiving circuits 21 to 24 respectively connected to the external office or main wires, communication circuits 29 to 32 respective adapted to communicate by radio with the handsets at different frequencies, a first switching circuit for establishing a connection between the respective available circuits of the transmitting and receiving circuits 21 to 24 and the communication circuits 29 to 32, a dial signal transmitting circuit for sending an input signal from the dial buttons 5 to given one of the main wires or a second switching circuit 27, the second switching circuit 27 for receiving the input signal from the dial buttons 5 to change the interconnections of the main wires corresponding to the communication circuits 29 to 32, a control circuit 28 for controlling these circuits, etc. In addition, there are provided an IC card record reproducing circuit 33 for reading or writing the IC card 10, a CPU for controlling the operation of lamps 11a of the lamp switches 11 and the speaker 12 in accordance with the program of the IC card 10, a memory 35 for the CPU 34, etc.

The handset 6 includes the microphone 6b, the speaker 6c, the communication circuit 6e for making a radio communication with the communication circuit 29 of the telephone proper 1, a call bell circuit 6f and the hook button 6a for effecting the switching between the communication circuit 6e and the call bell circuit 6f as well as contacts and a terminal (not shown) which respectively correspond to the charging contacts 3a and the signal terminal 3b on the telephone proper 1 side. The other handsets 7 to 9 are constructed in the like manner and they are adapted to communicate only with the communication circuits 30 to 32, respectively.

Next, the operation will be described with reference to Fig. 3. When any one of the transmitting and receiving circuits 21 to 24 of the telephone proper 1 receives a telephone call, the first switching circuit 25 is controlled by the control circuit 28 so that the external main wire in question is automatically connected to one of the communication circuits 29 to 32 which is not in use. Assuming now that the main wire is connected to the communication circuit 29, the main wire is connected to the communication circuit 6d of the handset 6 by a radio wave signal from the communication circuit 29 and a call bell is sounded by the speaker 6c through the call bell circuit 6f. At this time, if the handset 6 in question is raised from the mounting support 2 and the hook button 6a is operated to change the connection to the communication circuit 6e, it is possible to speak to the calling party through the microphone 6b and the speaker 6c. In this condition, if the dial buttons are operated so that any of the idle handsets, e.g., the handset 7 is designated, the second switching circuit 27 receives a dial signal to interconnects the designated main wires. As a result, the two persons of the handsets 6 and 7 are permitted to simultaneously participate in the same telephone conversation. It is to be noted that the second switching circuit 27 can simultaneously connect the three or four handsets in response to the operation of the dial buttons 5 and therefore as many as four persons can simultaneously participate in the conversation by telephone.

When telephoning from this side, the hook button 6a of the handset 6 is operated so that the talking circuit 6e, the communication circuit 6d and the communication circuit 29 of the telephone proper 1 are connected and also the first switching circuit 25 connects the communication circuit 29 to any idle one of the external main wires 21 to 24. Thus, if the dial buttons 5 are operated to ring up the party being called, the resulting ringing signal is sent to the connected external main wire from the dial signal transmitting circuit 26 thereby permitting the conversation with the called party by use of the handset 6. It is to be noted that the dial signal transmitting circuit 26 should preferably be controlled so that instead of being connected with the main wires at all times, in response to the operation of the hook button of the handset in question the dial signal transmitting circuit 26 is connected to the main wire to which this handset is connected for a given period of time, e.g., only 30 seconds. Further, in order to participate in this conversation by using any of the other handsets 7 to 9, it is necessary to use the same method as described in connection with the reception.

In either case of the transmission and reception, it is needless to say that unless connected by the second switching circuit 27, the handsets 6 to 9 are independently of one another and each of them is capable of conversation with a separate party. In addition, while each of the individual handsets 6 to 9 sounds the call bell, where it is difficult to judge which of the handsets is sounding, an LED or the like may be used concurrently so as to permit a visual judgement and thereby to prevent any mistake.

Further, by inserting the IC card 10 having the given program recorded thereon into the card record reproducing circuit 33 and operating the CPU 34, it is possible to easily change the colour of the lamps 11a, to cause the speaker 12 to sound a music, to change the sound volume and so on.

Still further, if the circuit construction of the CPU 34 is such that it is accessible to the various circuits of the telephone proper 1 and the main wires, it is possible to easily provide various additional functions such as providing the dial 5 with a special function, e.g., an abbreviated dial function through the utilization of the IC card 10 and recording calls or conversations on the IC card 10.

## Claims

1. A telephone characterized in that a single telephone is composed of a telephone proper connected to a plurality of external main wires and a plurality of handsets connected to said telephone proper, that there are provided dial buttons for calling the other party, a plurality of communication means each corresponding to one of said handsets to get into communication therewith, first switching means for changing connections of said communication means with said external main wires, second switching means responsive to a dial signal to change connections of said main wires with one another, and dial signal transmitting means for transmitting a dial signal to given one of said main wires to which at least one of said handsets is connected on said telephone proper side, and that there are provided means for communication with said telephone proper, signal and voice conversion means, and reception announcing means on each said handset side.

2. A telephone as set forth in claim 1, characterized in that radio connections are respectively provided at different frequencies between said telephone proper and said handsets.

3. A telephone as set forth in claim 1, characterized in that there are provided record reproducing means for IC cards, and control means accessible to said various means of said telephone proper on said telephone program whereby a program of an IC card is utilized to provide said telephone with an additional function.
